# FASCICULE DE BREVET EUROPEEN

(11) **EP 1 383 222 B1**
(45) Date de publication et mention de la délivrance du brevet: **31.08.2011**
(21) Numéro de dépôt: 03291584.5
(22) Date de dépôt: 27.06.2003
(51) Int. Cl.: H02J 7/00

(54) **Chargeur pour batterie**
Batterielader
Battery charger

(30) Priorité: 18.07.2002 FR 0209135
(43) Date de publication de la demande: 21.01.2004
(73) Titulaire: IPG Electronics 504 Limited, St Peter Port Guernsey GY1 3QL (GB)
(72) Inventeur: Rouverand, Christophe, 78100 Saint Germain en Laye (FR); Lomba, Vincent, 78800 Houilles (FR)
(74) Mandataire: Talbot-Ponsonby, Clare Josephine

(56) Documents cités:
- EP-A- 0 856 931
- US-A- 5 994 875

## Description

La présente invention concerne un chargeur pour batterie et trouve une application particulièrement avantageuse dans le domaine des batteries pour terminaux de radiocommunication.

Le document EP 0856931 montre un chargeur de batterie comportant un premier régulateur de courant en serie avec un deuxième régulateur de tension.

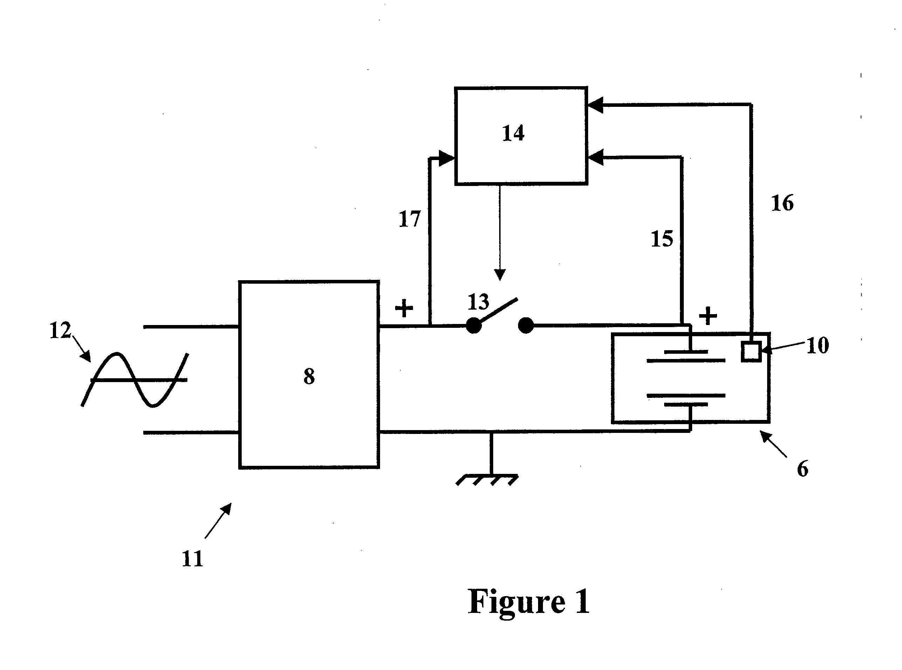

La figure 1 montre un dispositif classique de charge d'un terminal de radiocommunication tel qu'il est mis en oeuvre dans l'art antérieur. Le dispositif de charge 11 comprend un chargeur 8 dont les deux bornes d'entrée sont reliées au secteur 12. Les deux bornes de sortie du chargeur 8 sont reliées à la batterie 6 par l'intermédiaire d'un interrupteur de charge 13. Le dispositif de charge 11 comprend également un circuit intégré de gestion de charge 14 relié à la batterie 6 est relié à un détecteur 10 de la température de la batterie 6 via une connexion 16. Le circuit de gestion de charge 14 reçoit également une information correspondant à la tension de la batterie via la connexion 15. Le circuit de gestion 14 commande l'ouverture ou la fermeture de l'interrupteur de charge 13, de manière à démarrer ou arrêter la charge de la batterie 6. Le circuit de gestion 14 est également relié au chargeur 8 de façon à détecter la présence dudit chargeur 8. Cette détection se fait par une mesure de la tension de sortie du chargeur via la connexion 17. Le circuit de gestion 14, le détecteur 10 et l'interrupteur 13 se trouvent à l'intérieur du terminal de radiocommunication. Le chargeur 8 met en oeuvre une double fonction de redressement, de filtrage et de régulation afin d'obtenir à partir du secteur 12, le courant et la tension appropriés pour la charge de la batterie 6.

Le circuit de gestion 14, à partir des informations obtenues par les connexions 15 et 16, démarre et arrête la charge de la batterie 6 en commandant la fermeture ou l'ouverture de l'interrupteur de charge 13. Pour une batterie lithium ion, le circuit de gestion 14 utilisera plutôt l'information sur la tension de la batterie alors que pour une batterie NiMH, il utilisera l'information sur la température de la batterie. Dans tous les cas, ce circuit 14 reçoit une information du chargeur 8 correspondant à la tension de sortie du chargeur et lui permettant d'en déduire la présence du chargeur. Cette tension peut être relativement élevée lorsque l'interrupteur 13 est ouvert puisque la batterie n'est plus en charge ; elle peut atteindre des valeurs allant d'une dizaine à une vingtaine de volts. De telles tensions ne sont pas supportées par certains composants utilisés dans les circuits intégrés tels que les composants CMOS.

Une solution consiste à utiliser dans le circuit de gestion de charge des composants bipolaires BICMOS susceptibles de supporter des tensions plus élevées.

Cependant, la mise en oeuvre d'une telle solution pose certaines difficultés puisque les composants BICMOS sont d'un coût beaucoup plus élevé que les composants CMOS. De plus, la technologie CMOS est beaucoup plus répandue et standardisée que la technologie BICMOS.

En outre, il est de plus en plus difficile de différencier les modèles de chargeurs, notamment vis à vis de modèles piratés. Il est important de pouvoir déterminer l'authenticité d'un chargeur, notamment pour des raisons de sécurité et de normes d'utilisation.

Une solution consiste à mesurer la tension à vide des chargeurs et de considérer qu'il ne s'agit pas d'un piratage lorsque cette tension se trouve dans une plage fixe prédéterminée.

Cependant, une telle détermination laisse une marge d'erreur relativement élevée dans la mesure où tous les chargeurs ont une tension à vide relativement proche.

La présente invention vise à fournir un chargeur de batterie autorisant l'utilisation de composants tels que des composants CMOS supportant de faibles tensions dans le circuit de gestion de charge, ledit chargeur permettant une détermination efficace de son authenticité.

La présente invention propose à cet effet un chargeur selon la revendication 1.

Grâce à l'invention, la tension de sortie du chargeur est limitée, lorsque la batterie n'est pas en charge, à la valeur de tension prédéterminée régulée par le deuxième régulateur. Cette valeur prédéterminée peut ainsi être fixée à une valeur plus faible que la tension usuelle de sortie du chargeur lorsque la batterie est en charge. Le premier régulateur permet de délivrer une tension ou un courant nécessaire à la charge de la batterie. Ce premier régulateur n'est activé que lorsque la batterie est effectivement chargée. En charge, la tension de sortie du chargeur est alors légèrement inférieure à la tension de la batterie. Ainsi, les composants du circuit de gestion de charge de la batterie doivent supporter, au maximum, la tension de la batterie ; ces composants n'ont jamais à supporter une tension qui correspond à la tension de sortie à vide du chargeur lorsque le premier régulateur est activé, une telle tension pouvant être néfaste.

Très souvent, la tension de la batterie, même déchargée, sera supérieure à la valeur de la tension de régulation prédéterminée, ce qui va entraîner la circulation d'un courant négatif dans le chargeur lorsque la batterie est mise en charge. Dès lors, les moyens de détection détectent ce courant négatif et les moyens d'activation commutent le chargeur sur le premier régulateur en position de charge.

Enfin, une simple mesure de la tension de sortie à vide du chargeur donne une indiction très précise sur l'authenticité du chargeur. En effet, la valeur de la tension de sortie régulée étant très inférieure aux valeurs des tensions de sortie à vide usuellement utilisées pour la charge de batterie, il devient très simple de savoir s'il s'agit ou non d'un chargeur authentique. De plus, des circuits de protection sont à prévoir dans le terminal ou dans la batterie afin d'éviter des courants trop élevés provenant de chargeurs pirates. L'invention permet également de s'affranchir de ces circuits de protection.

Avantageusement, ledit premier régulateur est un régulateur de puissance ou de courant.

Ainsi, la tension de sortie est fixée par la tension de la batterie en charge. L'utilisation d'un régulateur de tension est également possible mais elle impose de prendre une tension de régulation supérieure à la tension de batterie.

Selon un mode de réalisation, lesdits moyens d'activation comportent un interrupteur commandé tel qu'un transistor et des moyens de commandes tels qu'un microcontrôleur, lesdits moyens de commande commandant ledit interrupteur et étant reliés à la sortie desdits moyens de détection.

De manière avantageuse, lesdits moyens de détection comportent au moins un premier comparateur tel qu'un amplificateur différentiel et une résistance de détection, chacune des bornes de ladite résistance étant respectivement reliée à une entrée dudit premier amplificateur différentiel.

Selon un mode de réalisation avantageux, lesdits moyens de détection comportent un deuxième comparateur tel qu'un amplificateur différentiel, l'entrée non inverseuse dudit deuxième amplificateur différentiel étant reliée à l'entrée inverseuse dudit premier amplificateur différentiel et l'entrée inverseuse dudit deuxième amplificateur différentiel étant reliée à l'entrée non inverseuse dudit premier amplificateur différentiel.

Avantageusement, ledit chargeur comporte des moyens de charge tels qu'une résistance ou un transistor de sorte qu'un courant négatif puisse circuler à travers lesdits moyens de charge.

De manière avantageuse, ledit chargeur est un chargeur pour batterie de terminaux de radiocommunication.

La présente invention a également pour objet un procédé de charge selon la revendication 1.

D'autres caractéristiques et avantages de la présente invention apparaîtront dans la description suivante d'un mode de réalisation de l'invention, donné à titre illustratif et nullement limitatif.

Dans les figures suivantes :
- la figure 1 représente un dispositif de charge d'un terminal de radiocommunication selon l'art antérieur,
- la figure 2 représente un dispositif de charge d'un terminal de radiocommunication comportant un chargeur selon l'invention,
- la figure 3 représente l'évolution du courant et de la tension de sortie du chargeur en fonction du temps.

Dans toutes les figures, les éléments communs portent les mêmes numéros de référence.

La figure 1 a déjà été décrite en relation avec l'état de la technique.

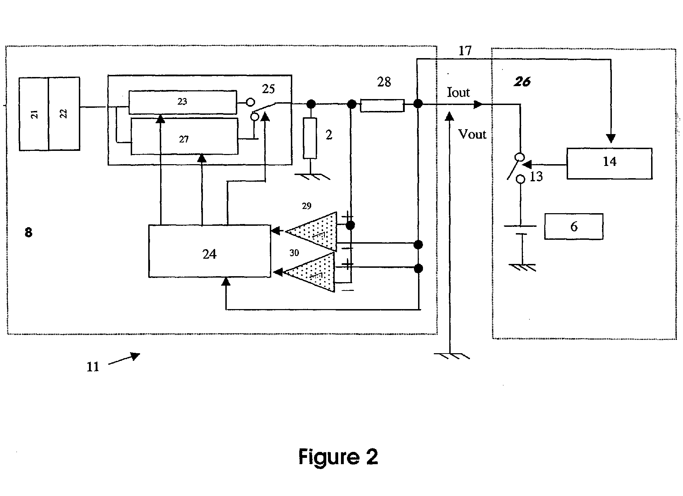

La figure 2 représente un dispositif de charge 11 comportant un chargeur 8 fournissant une tension de sortie Vₒᵤₜ et un courant de sortie lₒᵤₜ pour une batterie de terminal de radiocommunication 26.

Le terminal 26 comporte une batterie 6, un circuit de gestion de charge réalisé par un microcontrôleur 14 et un interrupteur de charge 13 commandé tel qu'un transistor MOSFET de puissance. Le microcontrôleur 14 commande l'interrupteur 13 et détecte la présence d'un chargeur en effectuant une mesure de la tension de sortie du chargeur Vₒᵤₜ via la connexion 17.

Le chargeur 8 comporte :
- un transformateur muni d'un enroulement primaire 21 et d'un enroulement secondaire 22,
- un régulateur de courant ou de puissance 23,
- un régulateur de tension 27,
- un interrupteur commandé 25 tel qu'un transistor MOSFET de puissance,
- une résistance de charge 2,
- une résistance de détection 28,
- deux comparateurs 29 et 30 tels que des amplificateurs différentiels,
- un microcontrôleur 24.

Les régulateurs 23 et 27 sont montés en parallèle entre la sortie de l'enroulement secondaire 22 et l'interrupteur 25 et sont réalisés selon des techniques connus, en utilisant par exemple, des informations de contre-réaction provenant du microcontrôleur 24.

L'interrupteur 25 est commandé par le microcontrôleur 24.

L'interrupteur 25 est montée en série avec l'une des bornes de la résistance de détection 28. La tension de sortie Vout se trouve sur l'autre borne de la résistance de détection 28.

Chacune des bornes de ladite résistance de détection 28 est respectivement reliée aux entrées non inverseuse et inverseuse du premier amplificateur différentiel 29.

L'entrée non inverseuse du deuxième amplificateur différentiel 30 est reliée à l'entrée inverseuse du premier amplificateur différentiel 29 et l'entrée inverseuse du deuxième amplificateur différentiel 30 est reliée à l'entrée non inverseuse du premier amplificateur différentiel 29.

Les sorties des amplificateurs différentiels 29 et 30 sont reliées au microcontrôleur 24.

La résistance de charge 2 est en série entre la résistance de détection 28 et la masse du chargeur 8.

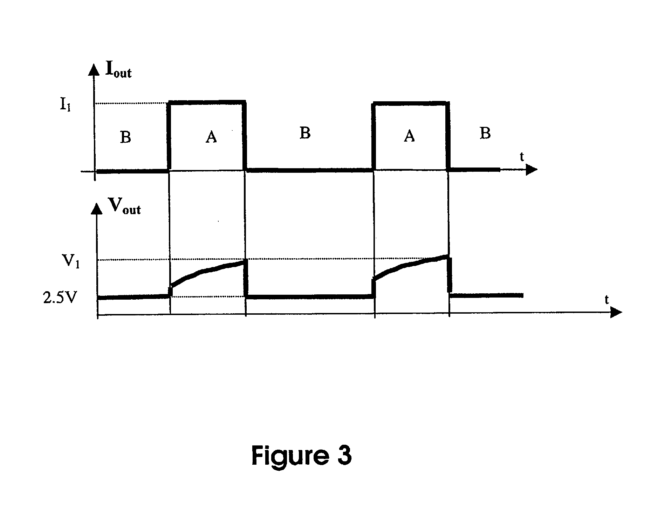

Le fonctionnement du chargeur 8 va être décrit à l'aide de la figure 3 qui représente l'évolution du courant lₒᵤₜ et de la tension de sortie Vₒᵤₜ du chargeur en fonction du temps. Nous prendrons l'exemple d'une batterie Li ion dont la tension chargée est environ égale à 4,2V et la tension déchargée est environ égale à 3V.

Si l'interrupteur 13 est ouvert par le microcontrôleur de gestion de charge 14, le courant lₒᵤₜ est nul. Cette étape correspond à la phase B. La tension aux bornes de la résistance 28 est alors nulle et les amplificateurs différentiels 29 et 30 fournissent tous les deux une tension nulle en sortie correspondant à un état logique bas. Le microcontrôleur 24 active le régulateur de tension 27 qui fixe Vₒᵤₜ à une tension prédéterminée, de l'ordre de 2,5Vinférieure à la tension de sortie du chargeur 8 lorsque la batterie est en charge.

Si l'interrupteur 13 passe en position fermée, la tension Vₒᵤₜ égale à 2,5V est inférieure à la tension batterie. Le courant lₒᵤₜ de sortie devient négatif (non représenté) et la batterie se décharge dans les résistances 28 et 2. L'amplificateur différentiel 30 fournit alors en sortie une tension positive correspondant à un état logique 1 et le microcontrôleur 24 active le régulateur de courant 23. Le chargeur est alors en position de charge et le courant de sortie lₒᵤₜ prend une valeur constante l₁ comprise entre 300 mA et 1A. Cette étape correspond à la phase A. Durant cette phase A, la tension de sortie Vₒᵤₜ se charge de 2,5 V à une valeur V₁ de l'ordre de 4V toujours inférieure à la tension de la batterie à cause de la chute de tension dans l'interrupteur 13. La résistance de charge 2 doit être fixée à une valeur suffisamment élevée pour ne pas influencer le fonctionnement en charge.

C'est maintenant l'amplificateur 29 qui fournit un état logique haut en sortie alors que la sortie de l'amplificateur 30 est à une tension négative correspondant à un état logique bas. Le microcontrôleur 24 maintient l'activation du régulateur de courant 23.

A nouveau, si l'interrupteur 13 est ouvert par le microcontrôleur 14, le courant lₒᵤₜ devient nul et cette étape correspond à la phase B.

Ainsi, la tension de sortie Vₒᵤₜ est toujours inférieure à la tension de la batterie et ne prend jamais la valeur de la tension à vide du chargeur lorsque le régulateur de courant 23 est activé. Les composants logiques du microcontrôleur 14 n'ont donc pas à tenir une tension trop élevée.

Bien entendu, l'invention n'est pas limitée au mode de réalisation qui vient d'être décrit.

Notamment, les microcontrôleurs utilisés peuvent être remplacés par des moyens analogiques remplissant les mêmes fonctions.

De même, la résistance de charge utilisée pour recevoir le courant négatif lorsque la batterie se décharge peut être remplacée par une résistance variable tel qu'un transistor bipolaire en régime linéaire. Un tel transistor permet de régler la valeur de la résistance en fonction de l'intensité du courant inverse sans avoir à prendre initialement une résistance de charge trop élevée.

Enfin, le chargeur a été décrit avec des comparateurs réalisés au moyen d'amplificateurs différentiels ; ces comparateurs peuvent également être réalisés au moyen de composants analogiques tels que des transistors.

## Revendications

1. Chargeur (8) générant une tension (Vₒᵤₜ) et un courant (Iₒᵤₜ) de sortie pour la charge d'une batterie (6) comportant :
- un premier régulateur (23), qui permet de délivrer une tension ou un courant nécessaire à la charge de la batterie,
- un deuxième régulateur (27) monté en parallèle au premier régulateur (23) et régulant ladite tension (Vₒᵤₜ) de sortie à une valeur prédéterminée inférieure à la tension de sortie du chargeur lorsque la batterie est en charge,
- des moyens de détection (28, 29, 30) dudit courant de sortie (Iₒᵤₜ),
- des moyens d'activation (24, 25) prenant au moins deux états :
o un premier état activant ledit premier régulateur (23) lorsque lesdits moyens de détection (28, 29, 30) détectent un courant de sortie (Iₒᵤₜ) strictement négatif ou strictement positif,
o un deuxième état activant ledit deuxième régulateur (27) lorsque lesdits moyens de détection (28, 29, 30) détectent un courant de sortie (Iₒᵤₜ) substantiellement nul.

2. Chargeur (8) selon la revendication 1 **caractérisé en ce que** ledit premier régulateur (23) est un régulateur de puissance ou de courant.

3. Chargeur selon l'une des revendications 1 ou 2 **caractérisé en ce que** lesdits moyens d'activation (24, 25) comportent un interrupteur commandé (25) et des moyens de commandes (24), lesdits moyens de commande commandant ledit interrupteur et étant reliés à la sortie desdits moyens de détection (29, 30).

4. Chargeur (8) selon l'une des revendications précédentes **caractérisé en ce que** lesdits moyens de détection (28, 29, 30) comportent au moins un comparateur (29, 30).

5. Chargeur (8) selon la revendication précédente **caractérisé en ce que** ledit comparateur (29, 30) est un premier amplificateur différentiel, lesdits moyens de détection comportant une résistance de détection (28), chacune des bornes de ladite résistance (28) étant respectivement reliée à une entrée dudit premier amplificateur différentiel (29).

6. Chargeur (8) selon l'une des revendications 4 ou 5 **caractérisé en ce que** lesdits moyens de détection (29, 30) comportent un deuxième comparateur.

7. Chargeur (8) selon la revendication 6 **caractérisé en ce que** ledit deuxième comparateur est un deuxième amplificateur différentiel (30), l'entrée non inverseuse dudit deuxième amplificateur différentiel (30) étant reliée à l'entrée inverseuse dudit premier amplificateur différentiel (29) et l'entrée inverseuse dudit deuxième amplificateur différentiel (30) étant reliée à l'entrée non inverseuse dudit premier amplificateur différentiel (29).

8. Chargeur (8) selon l'une des revendications 3 à 7 **caractérisé en ce que** lesdits moyens de commandes (24) sont un microcontrôleur.

9. Chargeur (8) selon l'une des revendications précédentes comportant des moyens de charge (2) de sorte qu'un courant négatif puisse circuler à travers lesdits moyens de charge.

10. Chargeur (8) selon l'une des revendications précédentes **caractérisé en ce que** ledit chargeur est un chargeur pour batterie de terminaux de radiocommunication.

11. Procédé de charge d'une batterie au moyen d'un chargeur générant une tension et un courant de sortie, ledit procédé comportant une étape de régulation et étant **caractérisé en ce qu'**il comporte les étapes suivantes :
- détection dudit courant de sortie,
- régulation d'un premier régulateur qui permet de délivrer une tension ou un courant nécessaire à la charge de la batterie lorsque ledit courant de sortie est strictement négatif ou strictement positif,
- régulation de la tension de sortie à une valeur prédéterminée inférieure à la tension de sortie dudit chargeur lorsque ladite batterie est en charge. d'un deuxième régulateur monté en parallèle au premier regulateur lorsque ledit courant de sortie est substantiellement nul.

12. Procédé de charge selon la revendication 1 11 comportant une étape de identification du chargeur selon l'une des revendications 1-10 comportant une étape de mesure de la tension de sortie à vide dudit chargeur et une étape de comparaison de ladite valeur tension de sortie avec ladite valeur prédéterminée fixée par ledit deuxième régulateur.

## Claims

1. Charger (8) generating an output voltage (Vₒᵤₜ) and an output current (Iₒᵤₜ) for charging a battery (6) comprising:
- a first regulator (23), which makes it possible to deliver a voltage or a current, necessary to charge the battery,
- a second regulator (27)mounted in parallel with respect to the first regulator (23) and regulating said output voltage(Vₒᵤₜ) at a predetermined value, lower than the output voltage of the charger when the battery is being charged,
- means (28, 29, 30) for detecting said output current (Iₒᵤₜ),
- activation means (24, 25) taking at least two states:
- a first state for activating said first regulator (23) when said detection means (28, 29, 30) detect a strictly negative or strictly positive output current (Iₒᵤₜ),
- a second state for activating said second regulator (27) when said detection means(28, 29, 30) detect a substantially zero output current (Iₒᵤₜ).

2. Charger (8) according to claim 1, **characterized in that** said first regulator (23) is a power or current regulator.

3. Charger according to one of claims 1 or 2, **characterized in that** said activation means (24, 25)comprise a controlled switch (25) and control means (24), said control means controlling said switch and being connected to the output of said detection means (29, 30).

4. Charger (8) according to one of the previous claims, **characterized in that** said detection means (28, 29, 30) comprise at least one comparator (29, 30).

5. Charger (8) according to the previous claim **characterized in that** said comparator (29, 30) is a first differential amplifier, said detection means comprising a detection resistor (28), each one of the terminals of said resistor (28) being respectively connected to an input of said first differential amplifier (29).

6. Charger (8) according to one of claims 4 or 5, **characterized in that** said detection means (29, 30) comprise a second comparator.

7. Charger (8) according to claim 6, **characterized in that** said second comparator is a second differential amplifier (30), the non-inverting input of said second differential amplifier (30) being connected to the inverting input of said first differential amplifier(29), and the inverting input of said second differential amplifier (30) being connected to the non-inverting input of said first differential amplifier (29).

8. Charger (8) according to one of claims 3 to 7, **characterized in that** said control means (24) are a microcontroller.

9. Charger (8) according to one of the previous claims comprising charging means (2) such that a negative current can flow through said charging means.

10. Charger (8) according to one of the previous claims, **characterized in that** said charger is a battery charger for radiocommunication terminals.

11. Method for charging a battery by means of a charger generating an output voltage and an output current, said method comprising a regulation step and being **characterized in that** it comprises the following steps:
- detection of said output current,
- regulation by a first regulator which makes it possible to deliver a voltage or a currant, necessary for charging the battery when said output current is strictly negative or strictly positive,
- regulation of the output voltage at a predetermined value, lower than the output voltage of said charger when said battery is charging, by a second regulator mounted in parallel with respect to the first regulator when said output current is substantially zero.

12. Method for charging according to claim 11 comprising a step of identifying the charger according to one of claims 1-10 comprising a step of measuring the off-load output voltage of said charger and a step of comparing said off-load output voltage with said predetermined value fixed by said second regulator.

## Patentansprüche

1. Ladegerät (8), das eine Ausgangsspannung (Vₒᵤₜ) und einen Ausgangsstrom (Iₒᵤₜ) erzeugt, zum Laden einer Batterie (6), wobei das Ladegerät Folgendes umfasst:
- einen ersten Regler (23), der ermöglicht, eine Spannung oder einen Strom zu liefern, die bzw. der zum Laden der Batterie erforderlich ist,
- einen zweiten Regler (27), der parallel zu dem ersten Regler (23) eingebaut ist, und der die Ausgangsspannung (Vₒᵤₜ) auf einen vorher festgelegten Wert reguliert, der niedriger als die Ausgangsspannung des Ladegeräts ist, wenn die Batterie geladen ist,
- Mittel zur Erfassung (28, 29, 30) des Ausgangsstroms (Iₒᵤₜ),
- Aktivierungsmittel (24, 25), die mindestens zwei Zustände annehmen:
o einen ersten Zustand, der den ersten Regler (23) aktiviert, wenn die Erfassungsmittel (28, 29, 30) einen Ausgangsstrom (Iₒᵤₜ) erfassen, der strikt negativ oder strikt positiv ist,
o einen zweiten Zustand, der den zweiten Regler (27) aktiviert, wenn die Erfassungsmittel (28, 29, 30) einen Ausgangsstrom (Iₒᵤₜ) erfassen, der im Wesentlichen Null ist.

2. Ladegerät (8) nach Anspruch 1, **dadurch gekennzeichnet, dass** der erste Regler (23) ein Leistungs- oder Stromregler ist.

3. Ladegerät nach einem der Ansprüche 1 oder 2, **dadurch gekennzeichnet, dass** die Aktivierungsmittel (24, 25) einen gesteuerten Schalter (25) und Steuerungsmittel (24) umfassen, wobei die Steuerungsmittel den Schalter steuern und mit dem Ausgang der Erfassungsmittel (29, 30) verbunden sind.

4. Ladegerät (8) nach einem der vorhergehenden Ansprüche, **dadurch gekennzeichnet, dass** die Erfassungsmittel (28, 29, 30) mindestens einen Komparator (29, 30) umfassen.

5. Ladegerät (8) nach dem vorhergehenden Anspruch, **dadurch gekennzeichnet, dass** der Komparator (29, 30) ein erster Differenzialverstärker ist, wobei die Erfassungsmittel einen Erfassungswiderstand (28) umfassen, wobei jede Klemme des Widerstands (28) jeweils mit einem Eingang des ersten Differenzialverstärkers (29) verbunden ist.

6. Ladegerät (8) nach einem der Ansprüche 4 oder 5, **dadurch gekennzeichnet, dass** die Erfassungsmittel (29, 30) einen zweiten Komparator umfassen.

7. Ladegerät (8) nach Anspruch 6, **dadurch gekennzeichnet, dass** der zweite Komparator ein zweiter Differenzialverstärker (30) ist, wobei der nichtinvertierende Eingang des zweiten Differenzialverstärkers (30) mit dem invertierenden Eingang des ersten Differenzialverstärkers (29) verbunden ist und der invertierende Eingang des zweiten Differenzialverstärkers (30) mit dem nichtinvertierenden Eingang des ersten Differenzialverstärkers (29) verbunden ist.

8. Ladegerät (8) nach einem der Ansprüche 3 bis 7, **dadurch gekennzeichnet, dass** die Steuerungsmittel (24) ein Mikrocontroller sind.

9. Ladegerät (8) nach einem der vorhergehenden Ansprüche, das Ladungsmittel (2) der Art umfasst, dass ein negativer Strom durch die Ladungsmittel strömen kann.

10. Ladegerät (8) nach einem der vorhergehenden Ansprüche, **dadurch gekennzeichnet, dass** das Ladegerät ein Ladegerät für eine Batterie von Funkendgeräten ist.

11. Verfahren zum Laden einer Batterie mithilfe eines Ladegeräts, das eine Ausgangsspannung und einen Ausgangsstrom erzeugt, wobei das Verfahren einen Regulierungsschritt umfasst und **dadurch gekennzeichnet ist, dass** es die folgenden Schritte umfasst:
- Erfassung des Ausgangsstroms,
- Regulierung durch einen ersten Regler, der ermöglicht, eine Spannung oder einen Strom zu liefern, die bzw. der zum Laden der Batterie erforderlich ist, wenn der Ausgangsstrom strikt negativ oder strikt positiv ist,
- Regulierung der Ausgangsspannung auf einen vorher festgelegten Wert, der niedriger als die Ausgangsspannung des Ladegeräts ist, wenn die Batterie geladen ist, durch einen zweiten Regler, der parallel zu dem ersten Regler eingebaut ist, wenn der Ausgangsstrom im Wesentlichen Null ist.

12. Ladeverfahren nach Anspruch 11, das einen Schritt des Identifizierens des Ladegeräts nach einem der Ansprüche 1 - 10 umfasst, der einen Schritt des Messens der Ausgangsleerlaufspannung des Ladegeräts und einen Schritt des Vergleichens des Ausgangsspannungswerts mit dem vorher festgelegten Wert, der vom zweiten Regler bestimmt wurde, umfasst.
